(19) Europäisches Patentamt
European Patent Office
Office européen des brevets

(11) Publication number: **0 149 190**
**A2**

(12) # EUROPEAN PATENT APPLICATION

(21) Application number: 84115909.8

(22) Date of filing: 20.12.84

(51) Int. Cl.[4]: C 08 L 67/02
//(C08L67/02, 69:00, 63:00, 71:04)

(30) Priority: 04.01.84 US 567985

(43) Date of publication of application:
24.07.85 Bulletin 85/30

(84) Designated Contracting States:
DE FR GB IT NL

(71) Applicant: GENERAL ELECTRIC COMPANY
1 River Road
Schenectady New York 12305(US)

(72) Inventor: Agarwal, Surendra Hukamchand
1301 N. Elsas Avenue
Evansville Indiana 47711(US)

(74) Representative: Schüler, Horst, Dr. et al,
Kaiserstrasse 41
D-6000 Frankfurt/Main 1(DE)

(54) **Flame retardant copolyetherester elastomers.**

(57) Flame retardant copolyetherester resins and blend compositions are provided for by incorporating therein specific halogenated organic flame retardants.

EP 0 149 190 A2

# Flame Retardant Copolyetherester Elastomers

The present invention relates to flame retardant, low-modulus thermoplastic copolyetherester elastomer compositions. Specifically, normally flammable low-modulus copolyetherester resins and resin compositions may be rendered more resistant to flammability by the incorporation therein of certain halogenated organic compounds.

## BACKGROUND

Copolyetheresters are well known and have enjoyed continued and increasing commercial success. They are available from several sources including the Hytrel© resins from E.I. duPont and the GAFLEX® resins from GAF Corporation and are described in U.S. Patent Nos. 3,023,192; 3,651,014; 3,763,109; 3,766,146; 3,784,520; 3,801,547; 4,156,774; 4,264,761 and 4,355,155, among others, all incorporated herein by reference. These are especially useful resins because they are quite varied in consistency ranging from a soft elastomer to semi-ridged plastics. As such, and because of their overall good physical properties, including superior tear strength, flex life, heat resistance, toughness, cold-proofing, etc., they are widely useful in many different applications, such as hosepipe, tubing, various industrial parts, various electrical parts, wire coating material, building components and film. Thus, they are capable of being molded into various articles by conventional plastic molding techniques including injection molding, blow molding, profile extrusion, rotomolding, and the like.

Additionally, copolyetherester resins may be modified to improve certain physical properties and further broaden their scope of application by incorporating therein various additives including

fillers and reinforcing agents to enhance toughness and vary the stiffness of the material. Further, such resins and modified resins can be blended with other thermoplastic materials to enhance various physical properties and improved processability. For example, Brown et al (U.S. Patent No. 3,907,926, incorporated herein by reference) have prepared copolyetherester compositions having improved Young's modulus combined with good low temperature impact strength and flexibility by creating a uniform blend of poly(butylene terephthalate) with a copolyetherester. Similarly, Perry et al (U.K. Patent No. 1,431,916, incorporated herein by reference) have improved the impact strength, stiffness, and processability of polyesters, particularly poly(alkylene terephthalates), by blending therewith a copolyetherester.

However, all of the above copolyetherester resins and resin blends suffer from and their applications are limited by their high flammability. In particular, where such resins are to be used for electric parts, wire coating and as building materials, it is most desirable and often required that such materials be resistant to or have low flammability.

It is generally known that the flammability of plastics can be lowered by the use of halogenated compounds, organic phosphorous compounds, halogenated-organic phosphorous compounds, nitrogen containing compounds and the like. However, often

times the incorporation of said flame retardant compounds adversely effects the physical properties of the resin material. Also, it is well recognized that such flame retardant compounds tend to have a high degree of specificity, i.e., they are not universally effective. Rather, they may be inoperable or their effectiveness vary from poor to excellent depending upon the particular material to be flame retarded.

In selecting suitable flame retardants, it is important to identify flame retardant agents which will impart flame retardency to the polymer material at lowest cost and still satisfy the performance criteria for the materials. Thus, in addition to achieving flame retardency, the flame retardant polymer material must possess processability, retain its specified physical properties, exhibit long term aging compatibility and pose no environmental hazards.

With particular reference to copolyetheresters, it has been difficult to adequately render such materials flame retardant without sacrificing their inherent, superior physical properties. This is further evident by the lack of a commercially available flame retarded grade copolyetherester. Specifically, the use of conventional flame retardant additives, in conventional amounts, causes marked decreases in the parameters ordinarily used to measure toughness, e.g., tensile and/or flexural strength, notched izod impact strength, and the like. Further, where attempts have been made to render copolyetheresters flame retardant without adversely effecting the physical properties, such compositions have been unable to achieve adequate flame retardancy as determined by UL-94 flammability testing.

It is the object of the present invention to identify flame retardant compounds suitable for use in copolyetheresters and which do not deleteriously effect the physical properties of said copolyetheresters.

SUMMARY

It has now been discovered that if carefully selected families of halogenated organic compounds are added to the normally flammable copolyetheresters, alone or in further combination with flame retardant synergists and/or anti-dripping agent, there will be provided highly efficient flame retardant copolyetherester compositions, without any substantial loss or sacrifice of desirable traits including toughness. Specifically, copolyetherester elastomers may be rendered flame retardant by incorporating therein, in a flame retarding amount:

(i) an aromatic carbonate copolymer in which from 25 to 75 weight percent of the repeating units comprise chloro- or bromo-substituted dihydric phenol units and the remainder of the repeating units comprised dihydric phenols, glycol or dicarboxylic acid units;

(ii) an aromatic carbonate polymer derived from dihydric phenols and containing terminal bromine-substituted aromatical radicals, said aromatic carbonate polymer represented by the following formula:

I.

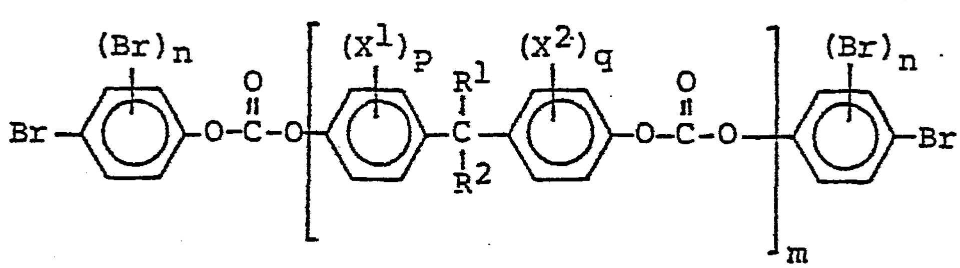

wherein $R^1$ and $R^2$ are independently hydrogen, (lower) alkyl or phenyl, n is an integer of 2-4, $X^1$ and $X^2$ are bromo or chloro, p and q are integers of from 0 to 4 and m is an integer of from 2 to about 400;

(iii) a high molecular weight brominated epoxy having aromatically bound bromine; or

(iv) a brominated polyphenylene oxide polymer having repeating units of the formula:

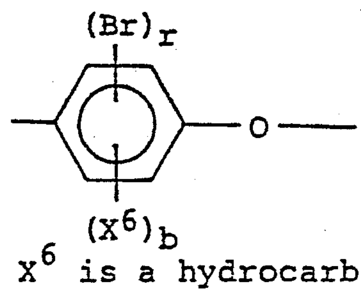

wherein $X^6$ is a hydrocarbon radical, a halohydrocarbon radical having at least two carbon atoms between the halogen and the phenol nucleus, a hydrocarbonoxy radical, and a halohydrocarbonoxy radical having at least two carbon atoms between the halogen and the phenol nucleus, r is an integer of from 1 to 4, b is an integer of from 0 to 3.

The normally flammable, low-modulus thermoplastic copolyetherester resins which may be rendered flame retardant or less flammable by admixing therewith one or more of the above-identified flame retardant materials consist essentially of a multiplicity of recurring intralinear long-chain and short-chain ester units connected head-to-tail through ester linkages, said long-chain ester units being represented by the following structure:

II $$-OGO-\overset{O}{\overset{\|}{C}}R\overset{O}{\overset{\|}{C}}-$$

and said short-chain ester units being represented by the following structure:

III $$-ODO-\overset{O}{\overset{\|}{C}}R\overset{O}{\overset{\|}{C}}-$$

wherein G is a divalent radical remaining after removal of terminal hydroxyl groups from poly(alkylene oxide) glycols having a carbon-to-oxygen ratio of from 2.0 - 4.3 and a divalent weight between about 400 to 6000; R is a divalent radical remaining after removal of carboxyl groups from one or more dicarboxylic acids having a molecular weight less than about 300; and D is a divalent radical remaining after removal of hydroxyl groups from one or more saturated and/or unsaturated, low molecular weight diols having a molecular weight less than about 250, with the provisions that the short-chain ester units constitute about 15-95% by weight, preferably 25-90% by weight, of the copolyetherester and, ergo, the long-chain ester units constitute about 5-85% by weight, preferably 10-75% by weight of the copolyetherester.

The flame retardant copolyetherester resin of the present invention may further comprise various additives, especially, for example reinforcing agents, such as glass, and/or mineral fillers such as mica, clay, talc, and the like.

Further, copolyetherester resin compositions comprising a blend of a copolyetherester resin and a second thermoplastic material preferably selected from the group consisting essentially of polycarbonates and polyesters, especially poly(alkylene terephthalate) polyesters, may be rendered less flammable by the addition of one or more of the above-identified flame retardants.

Finally, the flame retardant compositions of the present invention may preferably contain known flame

retardant synergists alone or in combination with anti-dripping for thixo tropic agents.

DETAILED DESCRIPTION

The term "long-chain ester units" as applied to units in the copolyetherester polymer chain refers to the reaction product of long-chain glycols with dicarboxylic acids. Such "long-chain ester units", correspond to formula (a) above. The long-chain glycols are polymeric glycols having terminal (or as nearly terminal as possible) hydroxy groups and a molecular weight of from about 400-6000. The long-chain glycols used to prepare the copolyetheresters of this invention are poly(alkylene oxide) glycols having a carbon-to-oxygen ratio of about 2.0-4.3.

Representative long-chain glycols are poly(ethylene oxide) glycol, poly(1,2- and 1,3-propylene oxide) glycol, poly(tetramethylene oxide) glycol, random or block copolymers of ethylene oxide and 1,2-propylene oxide, and random or block copolymers of tetrahydrofuran with minor amounts of a second monomer such as 3-methyltetrahydrofuran (used in proportions such that the carbon-to-oxygen mole ratio in the glycol does not exceed about 4.3).

The term "short-chain ester units" as applied to units in the polymer chain refers to low molecular weight compounds or polymer chain units having molecular weights less than about 550. They are made by reacting one or more low molecular weight saturated or unsaturated diols (below about 250) with one or more dicarboxylic acids to form ester units represented by formula (b) above.

Included among the low molecular weight diols which react to form short-chain ester units are saturated and/or unsaturated aliphatic, cycloaliphatic, and aromatic dihydroxy compounds.

Preferred are diols with 2-15 carbon atoms such as ethylene, propylene, tetramethylene, pentamethylene, 2,2-dimethyltrimethylene, hexamethylene and decamethylene glycols; dihydroxy cyclohexane; cyclohexane dimethanol; resorcinol; hydroquinone; 1,5-dihydroxy naphthalene; or mixtures of any one or more of these diols with unsaturated diols such as butene-diol, hexene-diol, etc. Especially preferred are saturated aliphatic diols, mixtures thereof or a mixture of a saturated diol(s) with an unsaturated diol(s), each diol containing 2-8 carbon atoms. Included among the bis-phenols which can be used are bis(p-hydroxy) diphenyl, bis(p-hydroxyphenyl)methane, and bis(p-hydroxyphenyl) propane. Equivalent ester forming derivatives of these diols are also useful (e.g., ethylene oxide or ethylene carbonate can be used in place of ethylene glycol). The term "low molecular weight diols" as used herein should be construed to include such equivalent ester-forming derivatives; provided, however, that the molecular weight requirement pertains to the diol only and not to its derivatives.

Dicarboxylic acids which are reacted with the foregoing long-chain glycols and low molecular weight diols to produce the copolyesters of this invention are aliphatic, cycloaliphatic, or aromatic dicarboxylic acids of a low molecular weight, i.e., having a molecular weight of less than about 300. The term "dicarboxylic acids" as used herein, includes equivalents of dicarboxylic acids having two functional carboxyl groups which perform substantially like dicarboxylic acids in reaction with glycols and diols in forming copolyester polymers. These equivalents include esters and ester-forming derivatives, such as acid halides and anhydrides. The molecular weight requirement pertains to the acid and

not to its equivalent ester or ester-forming derivative. Thus, an ester of a dicarboxylic acid having a molecular weight greater than 300 or an acid equivalent of a dicarboxylic acid having a molecular weight greater than 300 are included provided the acid has a molecular weight below about 300. The dicarboxylic acids can contain any substituent groups or combinations which do not substantially interfere with the copolyester polymer formation and use of the polymer of this invention.

Aliphatic dicarboxylic acids, as the term is used herein, refers to carboxylic acids having two carboxyl groups each attached to a saturated carbon atom. If the carbon atom to which the carboxyl group is attached is saturated and is in a ring, the acid is cycloaliphatic.

Aromatic dicarboxylic acids, as the term is used herein, are dicarboxylic acids having two carboxyl groups attached to a carbon atom in an isolated or fused benzene ring. It is not necessary that both functional carboxyl groups be attached to the same aromatic ring and where more than one ring is present, they can be joined by aliphatic or aromatic divalent radicals or divalent radicals such as -O- or $-SO_2-$.

Representative aliphatic and cycloaliphatic acids which can be used for this invention are sebacic acid, 1,3-cyclohexane dicarboxylic acid, 1,4-cyclohexane dicarboxylic acid, adipic acid, glutaric acid, succinic acid, oxalic acid, azelaic acid, diethylmalonic acid, allylmalonic acid, 4-cyclohexene-1,2- dicarboxylic acid, 2-ethylsuberic acid, tetramethylsuccinic acid, cyclopentanedicarboxylic acid, decahydro-1,5-naphthalene dicarboxylic acid, 4,4'- bicyclohexyl dicarboxylic acid, decahydro-2,6-naphthalene dicarboxylic acid,

4,4'-methylene bis(cyclohexane carboxylic acid), 3,4-furan dicarboxylic acid, and 1,1-cyclobutane dicarboxylic acid. Preferred aliphatic acids are cyclohexane-dicarboxylic acids and adipic acid.

Representative aromatic dicarboxylic acids which can be used include terephthalic, phthalic and isophtalic acids; bi-benzoic acid; substituted dicarboxy compounds with two benzene nuclei such as bis(p-carboxyphenyl) methane, oxybis(benzoic acid); ethylene-bis-(p-oxybenzoic acid); 1,5-naphthalene dicarboxylic acid; 2,6-naphthalene dicarboxylic acid, 2,7-naphthalene dicarboxylic acid; phenanthrene dicarboxylic acid; anthracene dicarboxylic acid; 4,4'-sulfonyl dibenzoic acid; and $C_1$-$C_{12}$ alkyl and ring substitution derivatives thereof, such as halo, alkoxy, and aryl derivatives. Hydroxyl acids such as p($\beta$-hydroxyethoxy) benzoic acid can also be used providing an aromatic dicarboxylic acid is also present.

Aromatic dicarboxylic acids are an especially preferred class for preparing the copolyetherester polymers of this invention. Among the aromatic acids, those with 8-16 carbon atoms are preferred, particularly the phenylene dicarboxylic acids, i.e., phthalic, terephthalic and isophthalic acids and their dimethyl derivatives.

It is preferred that at least about 30% of the short segments are identical and that the identical segments form a homopolymer in the fiber forming molecular weight range (molecular weight 5000) having a melting point of at least 150°C and preferably greater than 200°C. Copolyetheresters meeting these requirements exhibit a useful level of properties such as tensile strength and tear strength. Polymer melting points are conveniently determined by a differential scanning calorimeter.

The short-chain ester units will constitute about 15-95 weight percent of the copolyetherester. The remainder of the copolyetherester will be the long segments, ergo the long segment will comprise about 5-85 weight percent of the copolyetherester. Copolyetheresters in which the short-chain units comprise 25-90 weight percent with 10-75 weight percent long-chain units are preferred.

Preferred copolyetheresters are those prepared from dimethyl terephthalate, 1,4 butanediol, and poly(tetramethylene oxide) glycol having a molecular weight of about 600 to about 2000 or poly(ethylene oxide) glycol having a molecular weight of about 600-1500. Optionally up to about 30 mole percent, preferably 5-20 mole percent of the dimethyl terephthalate in these polymers can be replaced by dimethylphthalate or dimethyl isophthalate. Other preferred copolyetheresters are those prepared from dimethyl terephthalate, poly(tetramethylene oxide) glycol having a molecular weight of about 600 to about 2000, and a mixture of 1,4 butanediol with up to 50 mole percent, preferably from about 10 to about 40 mole percent of 1,6 hexanediol or 1,4 butenediol. The polymers based on poly(tetramethylene oxide) glycol are especially preferred because they are easily prepared, have overall superior physical properties, and are especially resistant to water.

Although the copolyesters of this invention possess many desirable properties, it is sometimes advisable to stabilize certain of the compositions to heat or radiation by ultraviolet light. This can be done by incorporating stabilizers in the polyester compositions. Satisfactory stabilizers comprise phenols and their derivatives, amines and their derivatives, compounds containing both hydroxyl and amine groups, hydroxyazines, oximes, polymeric

phenolic esters and salts of multivalent metals in which the metal is in its lower state.

Representative phenol derivatives useful as stabilizers include 3,5-di-tert-butyl-4-hydroxy hydrocinnamic triester with 1,3,5-tris-(2-hydroxyethyl-s-triazine-2,4,6-(1H, 3H, 5H) trione, 4,4'-bis(2,6-ditertiary-butylphenyl), 1,3,5-trimethyl-2,4,6-tris (3,5-ditertiary-butyl-4-hydroxylbenzyl)benzene and 4,4'-butylidene-bis(6-tertiary-butyl-m-cresol). Various inorganic metal salts or hydroxides can be used as well as organic complexes such as nickel dibutyl dithiocarbamate, manganous salicylate and copper 3-phenyl-salicylate. Typically amine stabilizers include N,N'-bis (beta-naphthyl)-p-phenylenediamine, N,N'-bis(1-methylheptyl)-p-phenylene diamine and either phenyl-beta-napththyl amine or its reaction products with aldehydes. Mixtures of hindered phenols with esters of thiodipropionic acid, mercaptides and phosphite esters are particularly useful. Additional stabilization to ultraviolet light can be obtained by compounding with various UV absorbers such as substituted benzophenones and/or benzotriazoles.

The properties of these copolyesters can be modified by incorporation of various conventional inorganic fillers such as carbon black, mica, talc, silica gel, alumina, clays and chopped fiberglass. These may be incorporated in amounts up to 50% by weight, preferably up to about 25% by weight. In general, these additives have the effect of increasing the modulus of the material at various elongations. Thus, low modulus filled or reinforced copolyethers are characterized as having a flexual modulus of less than about 400,000 psi, preferably less than 300,000 psi. Furthermore, the addition of these fillers, praticularly glass fiber, talc, clay

and mica present shrinkage and warpage in finished products.

The low modulus copolyetherester polymer composition may also contain, with or without the reinforcing agents or fillers, one or more high molecular weight thermoplastic polymers. Suitable high molecular weight thermoplastic polymers include polyesters, polycarbonates, polyolefins, styrene resins and copolymers of these and the like. Preferred are blends with polyesters and aromatic polycarbonates. Especially preferred are the poly(alkylene terephthalate) polyesters, particularly poly(ethylene terephthalate) and poly(butylene terephthalate). These blends are known in the art and are generally described in U.S. Patent Nos. 3,718,175; 3,907,926; 3,963,802; 4,124,653; 4,140,670; 4,157,325 and 4,184,997 and UK Patent No. 1,431,916, among others, all incorporated herein by reference.

Generally, the thermoplastic high-molecular weight polymer is blended with the copolyetherester in a property improving amount. While higher amounts are useful, a preferred amount will generally be from about 5 to about 200 parts by weight based on 100 parts by weight copolyetherester. Most preferably, the amount of thermoplastic polymer will be from about 5 to about 100 parts by weight based on 100 parts by weight copolyetherester.

Low modulus copolyetherester compositions consisting of unfilled or unreinforced blends of copolyetherester and a high molecular weight thermoplastic will generally have a flexual modulus of less than about 100,000 psi, preferably less than about 60,000 psi. However, filled and reinforced versions will generally, as noted above, have flexual

modulus of less than about 400,000 psi, preferably less than about 300,000 psi.

Briefly, polyesters suitable for use in the copolyetherester polyesters blends of the present invention are derived from one or more aliphatic and/or cycloaliphatic glycols and one or more aromatic dicarboxylic acids. The glycol may be selected from the group consisting essentially of ethylene glycol; 2 methyl-1,3 propanediol; 1,4-butanediol; 1,5-pentanediol; 1,6-hexanediol and 1,4-cyclohexanedimethanol, and the like. Suitable dicarboxylic acids include terephthalic acid, phthalic acid, isophthalic acid and naphthalene 2,6-dicarboxylic acid. The polyesters of the present invention may also contain minor amounts of other units such as aliphatic dicarboxylic acids and/or aliphatic polyols to form copolyesters.

Generally, the polyesters of the present invention may be represented by the formula

IV

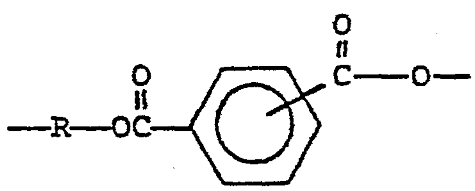

wherein R represents the divalent radical remaining after removal of the hydroxy groups from the glycol. Preferred polyesters include poly(ethylene terephthalate), poly(butylene terephthalate) and blends thereof.

The polyesters described herein are either commercially available or can be produced by methods well known in the art, such as those set forth in US patents 2,465,319; 3,047,539 and 2,910,466, herein incorporated by reference. Further, the polyesters used herein have an intrinsic viscosity of from about 0.4 to about 2.0 dl/g as measured in 60:40 phenol/tetrachloroethane mixture or a similar solvent at 30°C.

Similarly, any of the polycarbonates known in the art may be blended with the copolyetherester for use in the present invention. Especially preferred polycarbonates are the aromatic polycarbonates. Aromatic polycarbonates useful herein are homopolymers, copolymers and mixtures thereof, which have an intrinsic viscosity of from about 0.3 to about 1.0 dl/g as measured in methylene chloride at 25°C.

Generally, the aromatic polycarbonates are prepared by reacting a dihydric phenol with a carbonate precursor such as phosgene, a haloformate or a carbonate ester. Typical of the dihydric phenols that may be employed are 2,2-bis(4-hydroxyphenyl)propane; bis(4-hydroxyphenyl)methane; 2,2-bis(4-hydroxy-3-methylphenyl)propane; (3,3'-dichloro-4,4'-dihydroxy diphenyl)methane and the like. The aromatic polycarbonates may be formed in accordance with the methods set forth in U.S. Patent numbers 2,999,835; 3,028,365; 2,999,844; 4,018,750 and 4,123,435, all incorporated herein by reference, as well as other processes known to those skilled in the art.

The polycarbonates so produced are typified as possessing recurring structural units of the formula

$$-\!\!\left( A - O - \overset{\overset{O}{\|}}{C} - O \right)_{n}$$

wherein A is a divalent aromatic radical of the dihydric phenol employed in the polymer producing reaction and n is greater than 1, preferably from about 10 to about 400.

It is of course possible to employ two or more different dihydric phenols or a dihydric phenol in combination with a glycol, a hydroxy or acid terminated polyester, or a dibasic acid in the event

a carbonate copolymer or copolyester carbonate rather than a homopolymer polycarbonate is desired for use in the practice of the invention. Thus, it should be understood that the term "polycarbonate resin" embraces within its scope carbonate co-polymers.

Suitable copolymers also include those polycarbonate copolymers which comprise units derived from a first dihydric phenol which is a bis-(hydroxyaryl)sulfone and a second dihydric phenol such as 2,2-bis(4-hydroxyphenyl)propane as disclosed in U.S. Patent nos. 3,737,409; and 2,999,846.

Suitable styrene resins include homopolymers, copolymers and graft copolymers thereof. Especially preferred styrene resins include homopolymer polystyrene, ABS type graft copolymers, and core-shell type graft copolymers as disclosed in U.S. Patent numbers 4,180,494; 3,808,180; 4,096,202; 4,260,693 and 4,292,233. Also preferred are rubber modified polystyrene such as a butadiene rubber modified polystyrene also referred to as high impact polystyrene or HIPS; styrene-butadiene-styrene block copolymer such as the Kraton or Kraton-G polymers that are described in U.S. Patent numbers 3,646,162 and 3,595,942; the modified alpha and para substituted styrenes or any of the styrene resins disclosed in U.S. Patent number 3,383,435, all of the aforementioned patents herein incorporated by reference.

Suitable olefin polymers and copolymers include polyethylene, polypropylene and ethylene-vinyl acetate copolymers and ethylene ethylacrylate copolymers, respectively. Such polyolefins are well known in the art.

Finally, it is also possible to use blends of the foregoing high-molecular weight thermoplastics in the compositions of the present invention. For

example, one may use a combination of polycarbonate and a styrene resin, e.g. ABS or a core-shell graft copolymer. Other suitable combinations will be obvious to one skilled in the art.

The foregoing low-modulus thermoplastic copolyetherester resins and resin compositions may be rendered flame retardant or less flammable by the addition of a flame retarding amount of an halogenated organic flame retardant material selected from the group consisting essentially of:

(i) aromatic copolymer in which from 25 to 75 weight percent of the repeating units comprise chloro-or bromo-substituted dihydric phenol units and the remainder of the repeating units comprise dihydric phenol, glycol or dicarboxylic acid;

(ii) an aromatic carbonate polymer derived from dihydric phenols and containing terminal bromine-substituted aromatic radicals, said aromatic carbonate polymer presented by the following formula:

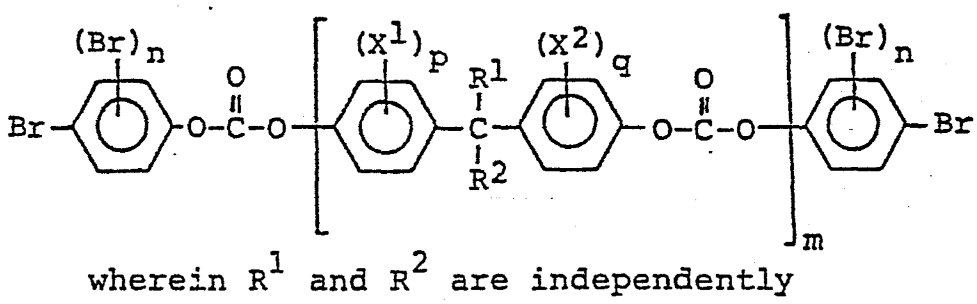

wherein $R^1$ and $R^2$ are independently hydrogen, (lower) alkyl or phenyl, n is an integer of 2-4; $X^1$ and $X^2$ are bromo or chloro; p and q are an integers of from 0 to 4 and m is an integer of from 2 to about 400;

(iii) a high-molecular weight brominated epoxy having aromatically bound bromine;

or

(iv) a brominated polyphenylene oxide

composition having repeating units of the formula:

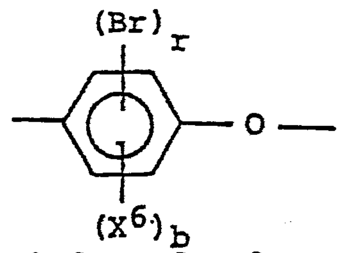

wherein $X^6$ is independently a hydrocarbon radical, a halohydrocarbon radical having at least two carbon atoms between the halogen and the phenol nucleus, a hydrocarbonoxy radical, and halohydrocarbonoxy radical having at least two carbon atoms between the halogen and the phenol nucleus, r is an integer of from 1 to 4, b is an integer of from 0 to 3.

Suitable flame retardants corresponding to (i) above generally comprise from about 25 to 75 weight percent chloro- or bromo-substituted dihydric phenol units and the remainder of the repeating units comprise dihydric phenol, glycol or dicarboxylic acid units.

The aromatic carbonate copolymers can be prepared by any of the well known methods which, for example, include reacting such materials as tetrabromobisphenol-A[2,2-bis-(3,5-dibromo-4-hydroxyphenyl)propane], or tetrachlorobisphenol-A [(2,2-bis(3,5-dichloro-4-hydroxyphenyl)propane], and another compound, such as a glycol, e.g., ethylene glycol or propylene glycol or a dicarboxylic acid, e.g., adipic acid or isophthalic acid, but preferably a dihydric phenol such as bisphenol-A [2,2-bis-(4-hydroxyphenyl)propane] with phosgene or a reactive derivative of phosgene.

In general, the carbonate copolymer modifier employed to provide the moldable flame-resistant polyester resin-containing compositions of the

present invention will be a copolymer prepared by reacting 75-25 wt. percent and preferably 45-30 wt. percent of tetrabromobisphenol-A or tetrachlorobisphenol-A and correspondingly, 25-75 and preferably 55-70 wt. percent of another compound which may be either a dihydric phenol, a glycol or a dicarboxylic acid or mixtures thereof, most preferably bisphenol-A, said weights being based on the total weight of the copolymer. In addition, the aromatic carbonate copolymer should have an intrinsic viscosity of 0.2-0.7 deciliters/gram, as measured, for example, in p-dioxane at about 30°C. Typical examples of the other compounds which can be employed in place of the bisphenol-A component of the copolymer are other dihydric phenols such as hydroquinone, resorcinol, 2,2-bis(4-hydroxyphenyl)-pentane, 2,4'-dihydroxydiphenylmethane, 2,6-dihydroxynaphthalene, bis-(4-hydroxyphenyl)-sulfone, 4,4'-dihydroxydiphenyl ether, etc.: or glycols, such as ethylene glycol, propylene glycol, tetramethylethylene glycol, etc.; and also dicarboxylic acids such as adipic acid, isophthalic acid, sebacic acid, etc.; as well as mixtures of any of the above. However, the preferred copolymer component for use in the practice of this invention is a copolymer of about 35 wt. percent of tetrabromobisphenol-A and 65 wt. percent of bisphenol-A, respectively.

In general, suitable halogenated aromatic carbonate flame retardants corresponding to (ii) above are homo- or co-polycarbonates chain terminated with a halogenated aromatic compound. They may be either of high or low molecular weight, however, especially preferred are the low-molecular weight end-capped polycarbonates where m in formula I above

is from about 2 to about 20, most preferably from about 3 to about 7.

Suitable compounds can be prepared by reacting a carbonate precursor with a mixture of a halogenated dihydric phenol and a chain stopper. The carbonate precursor may be either a carbonyl halide or a haloformate. Among the carbonyl halides may be mentioned carbonyl bromide, carbonyl chloride (i.e., phosgene), carbonyl fluoride, and the like. Suitable haloformates will inlcude the bischloroformate of tetrabromobisphenol-A or the chloroformate of tribromophenol (a chain stopper) all used together with phosgene, and the like. In all cases, phosgene is the preferred reactant for the dihydric phenols.

The halogenated dihydric phenols preferred for use in preparing the homopolymer of 2 to 20 units used in this invention may be of the formula

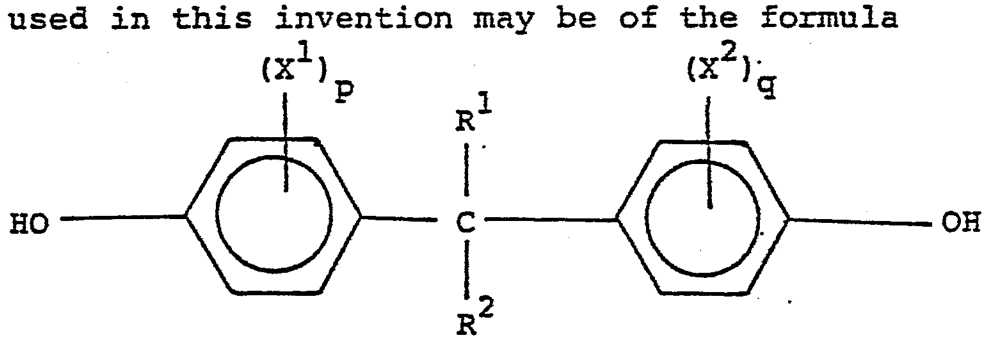

wherein $X^1$, $X^2$, $R^1$, $R^2$, p and q are as above defined. In all cases (lower)alkyl means straight and branched chain alkyl groups of from 1 to 6 carbon atoms. These dihydric phenols can be made in ways known to those skilled in the art, e.g., by the condensation of an unsubstituted or halogen substituted phenol and with the corresponding ketone, see, e.g., U.S. Patent No. 2,468,982, then this is followed, if desired, by chlorination or bromination of the aromatic rings.

Illustrative of the dihydric phenols most useful in the preparation of the chain-stopped homopolymers

of 2 to 20 units used in this invention are:

2,2-bis(3,5-dibromo-4-hydroxyphenyl)-propane (i.e., tetrabromobisphenol-A;

2,2-bis(3,5-dichloro-4-hydroxyphenyl)propane (i.e., tetrachlorobisphenol-A);

bis(2-bromo-4-hydroxyphenyl)methane;

bis(2,6-dibromo-4-hydroxyphenyl)methane;

1,2-bis(2,6-dibromo-4-hydroxyphenyl)ethane;

1,1-bis(2-bromo-6-chloro-4-hydroxyphenyl)ethane;

1,1-bis(3,5-dibromo-4-hydroxyphenyl)-ethane;

2,2-bis(2,6-dibromo-4-hydroxyphenyl)pentane;

3,3-bis(3,5-dibromo-4-hydroxyphenyl)hexane;

bis(3,5-dibromo-4-hydroxyphenyl)-phenylmethane;

bis(3,5-dibromo-4-hydroxyphenyl)cyclohexylmethane;

2,2-bis(4-hydroxy-2,3,5,6-tetrabromophenyl)propane;

2,2-bis(4-hydroxy-2,3,5,6-tetrachlorophenyl)propane;

and the like. Especially suitable and preferred is the commercially available compound tetrabromobisphenol-A.

Those skilled in the art will realize that a wide variety of chain stopper compounds can be used in the preparation of the components of from 2 to 20 repeating units. In all cases, the chain-stopper will be monofunctional and reactive with the end groups of the repeating units. Usually the end groups will be reactive derivatives of a carbonate precursor, as defined above, so that any mono-functional compound capable of reacting with a carbonyl halide, a carbonate ester or a haloformate will suffice. Merely by way of illustration, there can be used organic monohydroxy compounds; as well as carboxylic acids or acid halides and many others. Particularly suitable are halogenated organic hydroxy compounds, such as alcohols, e.g. methanol, ethanol, decanol, and the like, and phenols. Particularly preferred as chain stopping compounds are the chloro-or bromo-substituted organic phenols. The latter chain stoppers give rise to chain stopped components for use in the present compositions which have terminal substituents of the formulae:

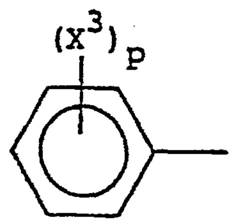

and

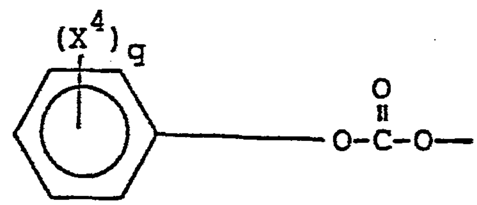

wherein $X^3$ and $X^4$ are bromo or chloro and p and q are each from 2 to 4. The respective phenols can be made in procedures well known to those skilled in the art. Illustrative of such phenols are 2-, 3-, 4-bromophenol and their chloro-analogs; 2,3-, 2,4-, 2,5- 2,6-, 3,5- and 3,4-dibromophenol and their chloro-analogs; 2,3,4,6- and 2,3,4,5-tetrabromophenol and their chloro-analog. Chloro-bromo compounds can also be used. Especially suitable chain stopping compounds are the trihalogenated phenols and especially preferred is 2,4,6-tribromophenol.

The chain-stopped polymers of carbonates of halogenated dihydric phenols having an average of about 2 to 20 units in the chain are prepared by reacting a carbonate precursor with a mixture of the dihydric phenol and the chain stopper preferably in an inert solvent, and in the presence of an acid acceptor, until condensation is complete. It is necessary to use at least the stoichiometric amount of the carbonate precursor, and preferably an excess.

Under such conditions the ratio of dihydric phenol to the monofunctional chain stopper will control the number of repeating dihydric phenolcarbonate units in the chain. If 2 moles of dihydric phenol and 2 moles of chain stopper are used, for example, the average number of repeating units, or m, as above defined, will be 2 and the product will have a relatively lower softening point. If, on the other hand, 10 or 20 moles of dihydric phenol and 2 moles of chain stopper are used, the average number of repeating units, m, will be about 10 or 20, as the case may be. It is preferred that the average number of repeating units, m, will be between 3 and 7 and especially preferred that they be of about 5. Accordingly, the molar ratio of dihydric phenol to chain stopper will preferably range from 3-7 to 2, and especially preferably, it will be about 5 to 2. If the product comprises a poly(tetrabromobisphenol-A carbonate), chain-stopped with 2,4,6-tribromophenol, such preferred ranges of repeating units will provide very useful softening points, e.g., from 230°C to 260°C and from 230°C and from 230°C to 240°C., respectively. Such compounds will have a high bromine content, i.e., 56-59 percent and an average molecular weight of about 3,000 to 3,500.

Methods for the production of carbonate flame retardants (i) and halogenated aromatically terminated carbonate flame retardants (ii) are disclosed in U.S. Patent Nos. 3,334,154; 3,382,207; 3,751,400; 3,855,277 and 3,915,926, among others, all incorporated herein by reference.

High molecular weight brominated epoxy flame retardants (iii) are also well known and commercially available. Especially preferred are the diglycidyl-type polymers with aromatically bound bromine. These are believed to be

tetrabromobisphenol-A bis diglycidyl ethers. Preferably these materials contain about 50% aromatically bound bromine; have an epoxy equivalent of from about 1700 to about 2100 g/eq, preferably about 1900 g/eq; a molecular weight of from about 2000 to 30,000; and are suitable at temperatures up to about 372°C. Especially preferred are the F-2300 diglycidyl-type polymers having about 50 percent aromatically bound bromine. These are produced and available from Makhtashim Chemical Works Ltd. and are described in Journal of Fire Retardant Chemistry, Vol. 9 (August, 1982) p. 181-7.

Finally, it has also been found that Brominated polyphenylene oxides (iv) impart flame retardance to copolyetherester resins and resin compositions.

Suitable brominated polyphenylene oxides are comprised of repeating units of the formula:

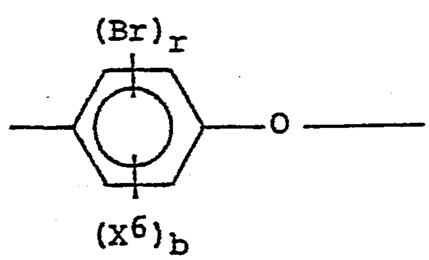

wherein $X^6$ is independently a hydrocarbon radical, a halohydrocarbon radical having at least two carbon atoms between the halogen atom and the phenol nucleus, a hydrocarbonoxy radical, or a halohydrocarbonoxy radical having at least two carbon atoms between the halogen atom and the phenol nucleus, r is an integer of from 1 to 4, b is an integer of 0 to 3 provided r + b is less than or equal to 4. Especially preferred are the dibromopolyphenylene oxides. These are available commercially from Great Lakes Chemical Corporation under the tradename Firemaster TSA PO64P (or just PO64P).

Moreover, the flame retardants used herein, such as the aromatic polycarbonate flame retardants, can also be used with a synergist, particularly inorganic or organic antimony compounds. Their use is most preferred. Such compounds are widely available or can be made in known ways. In preferred embodiments, the type of antimony compound used is not critical, being a choice primarily based on economics. For example, as inorganic compounds there can be used antimony oxide ($Sb_2O_3$); antimony phosphate; $KSb(OH)_6$; $NH_4SbF_3$; and the like. A wide variety of organic antimony compounds can also be used, such as antimony esters with organic acids; cyclic alkyl antimonites; aryl antimonic acids and the like. Illustrative of the organic antimony compounds, including inorganic salts of such compounds, are: KSb tartrate; Sb caproate; $Sb(OCH_2CH_3)_3$; $Sb(OCH(CH_3)CH_2CH_3)_3$; Sb polymethylene glycolate; triphenyl antimony; and the like; especially preferred is antimony oxide.

Finally, in addition to the synergists referred to above, the flame retardant materials may also contain an effective amount of a non-dripping agent. This amount will generally be from about 0.05 to about 5 weight percent based on the resinous component, preferably from about 0.1 to about 2.0 weight percent. Suitable non-dripping agents are well known and widely available. They include the fumed colloidal silicas and polytetrafluoroethylene resins. Especially preferred are the polytetrafluoroethylene resins, most preferably Teflon© 6 from E.I. duPont.

The amount of flame-retardant additive used is not critical to the invention, so long as it is present in a minor proportion based on said composition-major proporations will detract from physical properties-but at least sufficient to reduce

the flammability of the polyester resin. Those skilled in the art are well aware that the amount will vary with the nature of the resin and with the efficiency of the additive. In general, however, the amount of additive will be from 0.5 to 50 parts by weight per 100 parts of resin. A preferred range will be from about 3 to 50 parts and an especially preferred range will be from about 8 to 45 parts of additive per 100 parts of resin. Synergists, e.g., antimony oxide, will be used at about 1 to about 15 parts, preferably from about 2 to 10 parts by weight per 100 parts of resin.

The manner of adding the flame retardant additives to the thermoplastic polyester resin is not critical; is conventional; and will be obvious to those skilled in the art. Preferably, however, each ingredient is added as part of a blend premix and the latter is mixed, e.g., by passage through an extruder, or by fluxing on a mill, at a temperature dependent on the needs of the particular compositions. The mixed composition can be cooled and cut up into molding granules and molded or extruded or formed into any desired shape.

It is to be understood that the compositions of this invention can be used in many different ultimate shapes. For example, they may be molded into three-dimensional articles, or formed into films, or shaped into fibers, by conventional techniques.

## DETAILED DESCRIPTION OF THE PREFERRED EMBODIMENTS

The following examples are presented as illustrative of the present invention and are not to be construed as limiting thereof.

Unless otherwise stated, all compounds were prepared by preblending the ingredients followed by extrusion through a single screw extruder at 460°F. Test specimens were prepared by injection molding.

EXAMPLES 1 - 8

A series of copolyetherester-based compositions were prepared, each having added thereto various halogenated flame retardant agents. The specific flame retardant and formulation of the compositions molded and tested were as presented in Table 1. All flame retardants were added in an amount such that the total amount of bromine was 8%.

A review of the results shown in Table 1 clearly demonstrates the utility and specificity of the specific flame retardants disclosed and claimed in the present invention for use with copolyetherester compositions. Specifically, examples 1,3,6 and 7 utilizing bisphenol A/tetrabromobisphenol A carbonate copolymer,tetrabrominated bisphenol A carbonate oligomer chain terminated with tribromophenol, brominated polyphenylene oxide and diglycidyl-type polymer with 50% aromatically bound bromine, respectively, as flame retardant were effectively flame retarded. Comparatively, examples 2,4,5 and 8 utilizing decabromodiphenyl ether, brominated polystyrene, ethylene bis-tetrabromophthalimide and non-terminated tetrabromobisphenol A carbonate oligomer as flame retardant, respectively, were found to burn when subjected to UL94 Flammability Testing. It is noted that Examples 3 and 4 gave only a V-2 UL94 rating. However, these should easily be made V-0 by increasing the bromine content (i.e. use more flame retardant) or by the addition of thixotropic or non-dripping agents.

More importantly, comparison of the flame retardant versions with non-flame retardant copolyetherester (example A) demonstrates that these flame retarding agents have essentially no adverse effects upon the copolyetherester polymer. Rather, with the exception of tensile elongation, these flame

retardants enhanced the physical strength, i.e., tensile strength and flexural strength, of the copolyetherester.

TABLE 1
EFFECT OF FLAME RETARDANTS ON GAFLEX 555

| | A | 1 | 2 | 3 | 4 | 5 | 6 | 7 | 8 |
|---|---|---|---|---|---|---|---|---|---|
| Gaflex 555[a] | 100 | 61.8 | 83.0 | 78.8 | 80.8 | 80.8 | 80.1 | 76.6 | 77.2 |
| Antioxidant | - | 0.2 | 0.2 | 0.2 | 0.2 | 0.2 | 0.2 | 0.2 | 0.2 |
| RL-1624[b] | - | 31.0 | - | - | - | - | - | - | - |
| $SB_2O_3$ Concentrate | - | 6.5 | 6.5 | 6.5 | 6.5 | 6.5 | 6.5 | 6.5 | 6.5 |
| Teflon Concentrate | - | 0.5 | 0.5 | 0.5 | 0.5 | 0.5 | 0.5 | 0.5 | 0.5 |
| Saytex-102[c] | - | - | 9.8 | - | - | - | - | - | - |
| BC58[d] | - | - | - | 14.0 | - | - | - | - | - |
| Pyrochek 68PB[e] | - | - | - | - | 12.0 | - | - | - | - |
| BT-93[f] | - | - | - | - | - | 12.0 | - | - | - |
| Firemaster TSA P064P[g] | - | - | - | - | - | - | 12.7 | - | - |
| F-2300[h] | - | - | - | - | - | - | - | 16.2 | - |
| BC-52[i] | - | - | - | - | - | - | - | - | 15.6 |
| Notched Izod, ft.lbs./in. | NB | 3.1 | NB | NB | NB | NB | NB | NB | NB |
| Double Gated Unnotched Izod, ft.lbs./in. | - | NB | NB | NB | NB | NB | NB | NB | NB |
| Flexural Strength, psi | 1,500 | 3,000 | 1,600 | 1,600 | 1,800 | 1,900 | 1,900 | 1,400 | 1,700 |
| Flexural Modulus, psi | 24,500 | 63,000 | 24,600 | 24,700 | 29,000 | 31,500 | 31,200 | 22,900 | 27,800 |
| Tensile Strength, psi | 1,900 | 3,000 | 2,500 | 2,500 | 2,300 | 2,400 | 2,300 | 2,500 | 2,500 |
| Tensile Elongation, | 300 | 68 | 211 | 199 | 139 | 154 | 150 | 227 | 192 |
| Flammability | | | | | | | | | |
| 60 mil | Burn | V-0 | Burn | V-0 | Burn | Burn | V-0 | V-0 | Burn |
| 30 mil | | V-0 | - | V-2 | - | - | V-2 | V-0 | - |

a. Copolyetherester derived from 1,4-butanediol; 1,4-butanediol, dimethylterephthalate and poly(tetramethylene)glycol from GAF Corporation
b. Bisphenol-A/tetra bromo Bisphenol-A copolycarbonate from General Electric Company
c. Decarbromodiphenylether from Ethyl/Saytech
d. Tetrabromobisphenol-A carbonate oligomer chain terminated (capped) with tribromophenol from Great Lakes Chemical Corp.
e. Brominated polystyrene from Ferro Corporation
f. Ethylene Bis-tetrabromophthalimide from Ethyl/Saytech
g. Brominated polyphenylene oxide from Great Lakes Chemical Corp.
h. Diglycidyl-type polymer with 50% aromatically bound bromine from Makhteshim Chemical Works Ltd.
i. Tetrabromobisphenol-A carbonate oligomer from Great Lakes Chemical Corp.

EXAMPLES 9 - 12

A second series of flame retardant compositions was prepared demonstrating the effectiveness of the disclosed flame retardant agents in glass and mineral reinforced thermoplastic elastomers. The specific formulations and flame retardants used were as shown in Table 2.

TABLE 2

EFFECT OF FLAME RETARDANTS ON 30% MINERAL REINFORCED THERMOPLASTIC ELASTOMERS

| | 9 | 10 | 11 | 12 |
|---|---|---|---|---|
| Gaflex 555[a] | 48.8 | 48.8 | - | 55.8 |
| Hytrel 4275[b] | - | - | 48.8 | - |
| Glass | 30.0 | - | - | - |
| Clay | - | 30.0 | 30.0 | 20.0 |
| BC58[c] | 14.0 | 14.0 | 14.0 | - |
| $SB_2O_3$ Concentrate | 6.5 | 6.5 | 6.5 | 6.5 |
| Teflon Concentrate | 0.5 | 0.5 | 0.5 | 0.5 |
| Antioxidant | 0.2 | 0.2 | 0.2 | 1.0 |
| F-2300[d] | - | - | - | 16.2 |
| Notched Izod, ft.lbs./in. | 3.4 | 2.5 | 2.3 | 4.0 |
| Unnotched Izod, ft.lbs./in. | 14.6 | NB | NB | NB |
| Flexural Strength, psi | 9,756 | 3,000 | 3,100 | 2,350 |
| Flexural Modulus, psi | 300,451 | 67,800 | 75,800 | 51,450 |
| Tensile Strength, psi | 8,575 | 3,065 | 3,341 | 2,816 |
| UL-94, 60 mil | V-0 | V-0 | V-0 | V-0 |

a. Copolyetherester derived from 1,4-butanediol; 1,4-butanediol, dimethylterephthalate and poly(tetramethylene)glycol from GAF Corporation
b. Copolyetherester derived from 1,4-butanediol, dimethlterephthalate and poly(tetramethylene)glycol
c. Tetrabromobisphenol-A carbonate oligomer chain terminated (capped) with tribromophenol from Great Lakes Chemical Corp.
d. Tetrabromobisphenol-A carbonate oligomer from Great Lakes Chemical Corp.

EXAMPLES 13 - 18

A third series of samples were prepared further demonstrating the effectiveness of the disclosed flame retardants different copolyetheresters as well as in blends of copolyetherester with a second thermoplastic polymer, specifically polycarbonate and polyester. Example 18 is prophetic.

Once again, these examples demonstrate the ability of the disclosed flame retardants to effectively reduce flamability of these compositions without any adverse effects of the polymer composition itself.

TABLE 3*

FLAME RETARDANT COPOLYETHER ESTER BLEND COMPOSITIONS

| | A | B | 13 | 14 | 15 | 16 | 17 | 18 |
|---|---|---|---|---|---|---|---|---|
| Gaflex 555[a] | 100 | - | - | 75 | - | 60 | 48 | 60 |
| Gaflex 547[b] | - | 100 | 70 | - | 35 | - | - | - |
| LEXAN® 131 resin[c] | - | - | - | - | - | 18 | - | - |
| VALOX® 245 resin[d] | - | - | - | - | - | - | - | 20 |
| Glass | - | - | - | - | 40 | - | 30 | - |
| FRL-A[e] | - | - | - | - | - | 21 | - | 20 |
| FRL-B[f] | - | - | 29 | 24 | 23 | - | 21 | - |
| Teflon Concentrate | - | - | - | - | - | - | - | - |
| Notched Izod, ft.lbs./in. | NB | NB | NB | NB | 4.7 | NB | 4.0 | |
| Unnotched Izod, ft.lbs./in. | - | - | - | - | - | NB | - | |
| Flexural Strength, psi | 1,500 | 1,000 | 1,200 | 1,400 | 9,800 | 3,500 | 9,800 | |
| Flexural Modulus, psi | 24,500 | 16,000 | 20,000 | 24,500 | 348,00 | 76,000 | 285,000 | |
| Tensile Strength, psi | 1,900 | 1,300 | 1,300 | 1,700 | 7,800 | 4,500 | 8,200 | |
| Tensile Elongation | 300 | 300 | 280 | 300 | - | 223 | - | |
| Flammability UL-94 60 mil | Burn | HB+ | V-0 | V-0 | V-0 | v-0 | V-0 | |

* Copolyetherester also contains a minor amount (less than about 1.5%) antioxidant and/or other stabilizer

a. Copolyetherester derived from 1,4-butanediol; 1,4-butanediol, dimethylterephthalate and poly(tetramethylene)glycol from GAF Corporation

b. Same as a. except different ratio of 1,4-butanediol to 1,4-butenediol

c. Bisphenol-A polycarbonate from General Electric Company

d. Poly(butylene terephthalate)polyester from General Electric Company

e. Flame retardant concentrate of BC58 (note d. Table 1), antimony oxide and teflon concentrate

f. Flame retardant concentrate of F-2300 (note h. Table 1), antimony oxide and teflon concentrate

\+ Horizontal Burn

Obviously, other modifications and variations of the present invention are possible in view of the above teachings. It is therefore, to be understood that changes may be made ion the particular embodiments of the invention described which are within the full intended sope of the invnetion as defined by the appended claims.

CLAIMS:

1. A flame retardant low-modulus copolyetherester composition comprising:

(i) a low-modulus copolyetherester resin;

(ii) a flame retarding amount of a flame retarding agent selected from the group consisting essentially of

(a) an aromatic carbonate copolymer in which from 25 to 75 weight percent of the repeating units comprise chloro- or bromo-substituted dihydric phenol units and the remainder of the repeating units comprise dihydric phenol, glycol or dicarboxylic acid units;

(b) an aromatic carbonate polymer derived from dihydric phenols and containing terminal bromine-substituted aromatic radicals, said polymer being represented by the following formula:

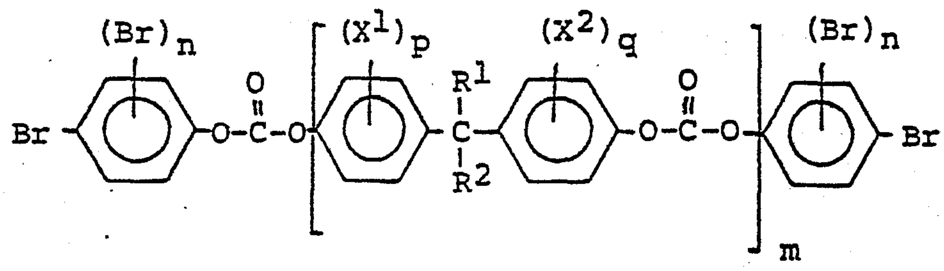

wherein n is an integer of 2 - 4, $R^1$ and $R^2$ are independently halogen, alkyl or aralkyl, $X^1$ and $X^2$ are bromo- or chloro-, p and q are integers of from 0 to 4, and m is an integer of from 2 to about 400;

(c) a high-molecular weight brominated epoxy having aromatically bound bromine; and

(d) brominated polyphenylene oxides having repeating units of the following structure:

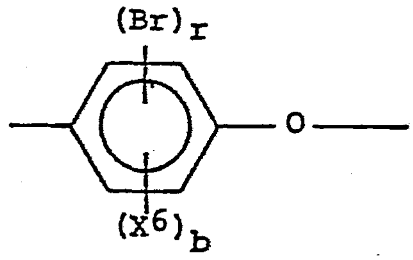

wherein $X^6$ is independently a hydrocarbon radical, a halo-hydrocarbon radical having at least two carbon atoms between the halogen and the phenol nucleus, a hydrocarbonoxy radical, and a halohydrocarbonoxy radical having at least two carbon atoms between the halogen and the phenol nucleus, r is an integer of from 1 to 4, b is an integer of from 0 to 3 provided r + b is less than or equal to 4;

(iii) optionally, an effective amount of a flame retardant synergist; and

(iv) optionally, a second thermoplastic polymer.

2. The composition of claim 1 wherein the copolyetherester resin consists essentially of a multiplicity of recurring intralinear long-chain and short-chain ester units connected head to tail through ester linkages, said long-chain ester units being represented by the following structure:

$$-OGO-\overset{\overset{O}{\|}}{C}R\overset{\overset{O}{\|}}{C}-$$

and said short-chain ester units being represented by the following structure:

$$-ODO-\overset{\overset{O}{\|}}{C}R\overset{\overset{O}{\|}}{C}-$$

wherein G is a divalent radical remaining after removal of terminal hydroxyl groups from poly(alkylene oxide)glycols having a carbon-to-carbon ratio of from 2.0 - 4.3 and a molecular weight between about 400 to 6000; R is a divalent radical remaining after the removal of carboxy groups from one or more dicarboxylic acids having a molecular weight of less than about 300; and D is a divalent radical remaining after the removal of hydroxyl groups from one or more saturated and/or unsaturated, low-molecular weight diols having a molecular weight less than about 250, with the provisons that the short-chain ester units constitute anout 15-95% by weight, preferably from about 25-90% by weight, of the copolyetherester and, ergo, the long-chain ester units constitute about 5-85% by weight, preferably 10-75% by weight of the copolyetherester.

3. The composition of claim 2 wherein the copolyetherester is derived from butanediol, poly(tetramethylene oxide) glycol and dimethyl terephthalate.

4. The composition of claim 2 wherein the copolyetherester is derived from butanediol, hexanediol, poly(tetramethylene oxide) glycol and dimethylterephthalate.

5. The composition of claim 2 wherein the copolyetherester is derived from butanediol, butene-diol, poly(tetramethylene oxide) glycol and dimethyl terephthalate.

6. The composition of claim 1 which further comprises one or more high-molecular weight thermoplastic polymers selected from the group consisting essentially of polyesters, polycarbonates, polyolefins, styrenic resins and copolymers thereof.

7. The composition of claim 6 wherein the high-molecular weight thermoplastic polymer is a polyester represented by the formula

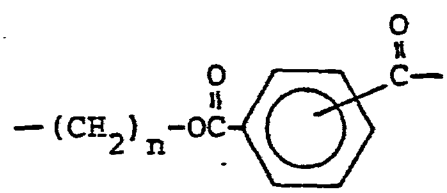

wherein n is an integer of from about 2 to about 10.

8. The composition of claim 7 wherein the polyester is poly(butylene terephthalate).

9. The composition of claim 7 wherein the high-molecular weight thermoplastic is an aromatic polycarbonate.

10. The composition of claim 9 wherein the polycarbonate is the polycarbonate of bisphenol A.

11. The composition of claim 1 wherein the second thermoplastic polymer is present in an amount of from about 5 to about 200 parts by weight based on 100 parts by weight copolyetherester.

12. The composition of claim 1 wherein the second thermoplastic polymer is present in an amount of from about 5 to about 100 parts by weight based on 100 parts by weight copolyetherester.

13. The composition of claim 1 wherein the aromatic carbonate copolymer (a) is one in which from 75 to 25 weight percent of the repeating units comprise tetrabromobisphenol-A units and from 25 to 75 weight percent of the repeating units comprise bisphenol-A units.

14. The composition of claim 1 wherein the aromatic carbonate copolymer (a) is one in which from 45-30 weight percent of the repeating units comprise tetrabromobisphenol-A and from 55-70 weight percent of the repeating units comprise bisphenol-A.

15. The composition of claim 1 wherein the aromatic carbonate copolymer (a) is one in which about 35 weight percent of the repeating units comprise tetrabromobisphenol-A and about 65 weight percent of the repeating units comprise bisphenol-A and wherein said copolymer has an intrinsic viscosity of from about 0.2 to about 0.7.

16. The composition of claim 1 wherein the aromatic carbonate polymer (b) has from about 2 to about 20 repeating units.

17. The composition of claim 1 wherein the aromatic carbonate polymer (b) has from about 3 to about 7 repeating units.

18. The composition of claim 1 wherein the aromatic carbonate polymer (b) is end-capped with tribromophenol.

19. The composition of claim 1 wherein the high-molecular weight brominated epoxy (c) is a diglycidyl type polymer having aromatically bound bromine and an epoxy equivalent of from about 1700 to about 2100 g/eq.

20. The composition of claim 19 wherein the diglycidyl type polymer has about 50% aromatically bound bromine, an epoxy equivalent of about 1900 g/eq and a molecular weight of from about 2000 to 30,000.

21. The composition of claim 1 wherein the brominated polyphenylene oxide is poly(dibromophenylene oxide).

22. The composition of claim 1 wherein the flame retardant (ii) is present in an amount of from about 0.5 to about 50 parts by weight per 100 parts by weight resinous component.

23. The composition of claim 1 wherein the flame retardant (ii) is present in an amount of from about 3 to about 50 parts by weight per 100 parts by weight resinous component.

24. The composition of claim 1 wherein the flame retardant (ii) is present in an amount of from about 8 to 45 parts by weight per 100 parts by weight resinous components.

25. The composition of claim 1 wherein the synergist is an antimony compound.

26. The composition of claim 25 wherein the synergist is antimony oxide.

27. The composition of claim 1 wherein the synergist is present in an amount of from about 1 to about 15 parts by weight per 100 parts resinous components.

28. The composition of claim 1 wherein the synergist is present in an amount of from about 2 to about 10 parts by weight per 100 parts by weight resinous components.

29. The composition of claim 1 which further comprises up to 50 percent by weight of a reinforcing or filler agent selected from the group consisting essentially of carbon black, talc, mica, clay and fiberous glass and the like.

30. The composition of claim 1 which further comprises up to 25 percent by weight of a reinforcing or filler agent selected from the group consisting essentially of carbon black, talc, mica, clay and fiberous glass.

31. The composition of claim 1 which further contain an effective amount of non-dripping agent to render said composition non-dripping.

32. The composition of claim 31 wherein the non-dripping agent is a polytetrafluoroethylene resin.